# EUROPÄISCHE PATENTSCHRIFT

(11) **EP 3 231 668 B1**
(45) Veröffentlichungstag und Bekanntmachung des Hinweises auf die Patenterteilung: **03.06.2020**
(21) Anmeldenummer: 17000597.9
(22) Anmeldetag: 07.04.2017
(51) Int. Cl.: B60R 1/00

(54) **FAHRZEUG, INSBESONDERE NUTZFAHRZEUG, MIT EINEM SPIEGELERSATZSYSTEM**
VEHICLE, IN PARTICULAR COMMERCIAL VEHICLE, WITH A MIRROR REPLACEMENT SYSTEM
VÉHICULE, EN PARTICULIER VÉHICULE UTILITAIRE, ÉQUIPÉ D'UN SYSTÈME DE REMPLACEMENT DE RÉTROVISEUR

(30) Priorität: 14.04.2016 DE 102016004581
(43) Veröffentlichungstag der Anmeldung: 18.10.2017
(73) Patentinhaber: MAN Truck & Bus SE, 80995 München (DE)
(72) Erfinder: Zimmermann, Andreas, 80995 München (DE); Feldmeier, Daniel, 82152 Planegg (DE)
(74) Vertreter: Liebl, Thomas

(56) Entgegenhaltungen:
- EP-A1- 2 993 072
- EP-A2- 1 672 588
- WO-A1-2009/043783
- WO-A1-2015/114697
- DE-A1-102012 019 508
- DE-A1-102013 209 366
- JP-A- 2008 230 296
- US-A1- 2003 162 312
- US-A1- 2010 253 597
- US-A1- 2011 025 584
- US-A1- 2014 320 399
- US-A1- 2015 009 100
- US-A1- 2015 232 030

## Beschreibung

Die Erfindung betrifft ein Fahrzeug, insbesondere ein Nutzfahrzeug, nach dem Oberbegriff des Patentanspruches 1 sowie ein Verfahren zum Betreiben eines Fahrzeugs, insbesondere eines Nutzfahrzeugs, nach dem Oberbegriff des Patentanspruches 11. Ein solches Fahrzeug sowie ein solches Verfahren sind aus der US 2015/0232030 A1 bekannt.

Es ist bekannt, an einem Fahrzeug, insbesondere an einem Lastkraftwagen, ein Spiegelersatzsystem vorzusehen, mittels dem von dem Fahrzeug abragende Spiegel, beispielsweise Seitenspiegel oder Frontspiegel, ersetzt werden können. Ein derartiges Spiegelersatzsystem weist üblicherweise eine Kamera auf, mittels der der mit dem zu ersetzenden Spiegel anzuzeigende Bereich der Fahrzeugumgebung bildlich bzw. filmisch erfasst wird. Mit einer Kamera zum Ersetzen eines Seitenspiegels kann dabei beispielsweise ein, in Fahrzeug-Querrichtung gesehen, seitlich neben dem Fahrzeug befindlicher Seitenbereich erfasst werden. Mit einer Kamera zum Ersetzen eines Frontspiegels kann beispielsweise ein, in Fahrzeug-Längsrichtung gesehen, unmittelbar vor dem Fahrzeug befindlicher Frontbereich erfasst werden.

Zur Anzeige des mittels der Kamera erfassten Bereichs weisen die bekannten Spiegelersatzsysteme einen Bildschirm, insbesondere einen TFT-Monitor, auf, der üblicherweise einer Instrumententafel oder einer Mittelkonsole des Fahrzeugs zugeordnet ist. Eine derartige Anzeige der Fahrzeugumgebung hat jedoch den Nachteil, dass an dem Bildschirm keine bzw. nur wenige weitere Informationen wie beispielsweise eine Navigationsroute angezeigt werden können, wenn die erfasste Fahrzeugumgebung angezeigt wird. Für einen zusätzlichen Bildschirm speziell zur Anzeige der erfassten Fahrzeugumgebung ist zudem üblicherweise kein Bauraum an der Instrumententafel vorhanden. Des Weiteren ist es für einen Fahrer des Fahrzeugs auch ungewohnt bzw. gewöhnungsbedürftig, die Fahrzeugumgebung an der Instrumententafel zu beobachten.

Aufgabe der Erfindung ist es daher, ein Fahrzeug, insbesondere ein Nutzfahrzeug, sowie ein Verfahren zum Betreiben eines Fahrzeugs, insbesondere eines Nutzfahrzeugs, bereitzustellen, mittels denen die erfasste Fahrzeugumgebung platzsparend angezeigt und gleichzeitig auch der Fahrerkomfort erhöht wird.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird ein Fahrzeug, insbesondere ein Nutzfahrzeug, vorgeschlagen, mit einem Spiegelersatzsystem, das wenigstens eine Bild-Erfassungseinrichtung, insbesondere eine Kamera aufweist, mittels der zumindest ein Teil der Fahrzeugumgebung bildlich und/oder filmisch erfassbar ist, wobei die Bild-Erfassungseinrichtung signaltechnisch mit einer Anzeigeeinrichtung gekoppelt ist, mittels der die erfasste Fahrzeugumgebung einem Fahrer des Fahrzeugs anzeigbar ist, wobei die Anzeigeeinrichtung durch eine Projektionseinrichtung gebildet ist, mittels der die erfasste Fahrzeugumgebung auf wenigstens eine definierte Projektionsfläche projizierbar ist, wobei die erfasste Fahrzeugumgebung derart an die als transparente Projektionsfläche ausgebildete definierte Projektionsfläche projiziert wird, dass es für den Fahrer scheint, dass die erfasste Fahrzeugumgebung außerhalb des Fahrzeugs angezeigt wird, wobei eine Stelleinrichtung vorgesehen ist, mittels der der Transparenzgrad der Projektionsfläche einstellbar und/oder verstellbar ist, wobei eine Fahrsituations-Erkennungseinrichtung vorgesehen ist, die signaltechnisch mit der Stelleinrichtung verbunden ist und die aktuelle Fahrsituation erfasst, und wobei die Stelleinrichtung Bestandteil einer Regel- und/oder Steuereinrichtung ist, mittels der der Transparenzgrad der Projektionsfläche in Abhängigkeit von der aktuellen Fahrsituation selbsttätig einstellbar ist, wobei der Transparenzgrad der Projektionsfläche verringert wird, um die Anzeige eines schwer einsehbaren Bereichs der Fahrzeugumgebung an der Projektionsfläche zu verbessern.

Auf diese Weise kann die erfasste Fahrzeugumgebung platzsparend angezeigt werden, da diese nun projiziert wird und somit nicht mehr an einem der Instrumententafel zugeordneten Bildschirm angezeigt werden muss. Dadurch wird die Flexibilität der Anzeige deutlich erhöht. Die Projektionsfläche kann dabei durch eine bereits von der Fahrzeugstruktur vorgegebene Oberfläche, beispielsweise durch eine Fensterscheiben-Oberfläche, oder durch ein speziell zur Anzeige der Fahrzeugumgebung gebildetes Projektionselement gebildet sein. Durch die erhöhte Flexibilität der Anzeige kann die erfasste Fahrzeugumgebung zudem auch an einen von dem Fahrer bevorzugten Anzeigebereich projiziert werden, wodurch auch der Fahrerkomfort erhöht wird. Mittels der alternativen Ausbildung der Anzeigeeinrichtung durch einen, einem Fensterbereich des Fahrzeugs zugeordneten transparenten Bildschirms kann die erfasste Fahrzeugumgebung ebenfalls besonders platzsparend angezeigt werden, da die Fahrzeugumgebung nun ebenfalls nicht mehr an der Instrumententafel angezeigt werden muss. Dies erhöht zudem auch den Fahrerkomfort, da es der Fahrer gewöhnt ist, zu einer bzw. durch eine Fensterscheibe zu blicken, wenn er die regulären Fahrzeug-Außenspiegel benutzen will.

Die Projektionsfläche muss hier dabei nicht zwingend diejenige Fläche sein, an der dem Fahrer der Umgebungsbereich angezeigt wird. Ebenso kann der erfasste Umgebungsbereich auch derart an die Projektionsfläche projiziert werden, dass es für den Fahrer scheint, dass der erfasste Umgebungsbereich vor oder hinter der Projektionsfläche angezeigt wird.

Als transparenter Bildschirm ist vorzugsweise ein Bildschirm zu verstehen, dessen Anzeigefläche bzw. Anzeigebereich sowohl im eingeschalteten als auch im ausgeschalteten Zustand des Bildschirms zumindest teilweise durchsichtig ist.

In einer bevorzugten Ausgestaltung des erfindungsgemäßen Fahrzeugs ist die Projektionsfläche durch ein zusätzliches, speziell zur Anzeige des Umgebungsbereichs vorgesehenes Projektionselement gebildet. Mittels eines derartigen Projektionselements kann die erfasste Fahrzeugumgebung einfach und deutlich angezeigt werden. Bevorzugt ist dabei vorgesehen, dass das Projektionselement transparent ausgebildet ist, um die Sicht des Fahrers, beispielsweise hin zu einer Frontscheibe des Fahrzeugs, in einem möglichst geringen Maß negativ zu beeinflussen. Das transparente Projektionselement kann dabei beispielsweise durch eine oberflächenbehandelte Glasscheibe gebildet sein, die einfallendes Licht hindurchlässt und projiziertes Licht reflektiert.

Gemäß einer Alternative, die nicht zur Erfindung gehört, kann die Projektionsfläche auch durch eine von der Fahrzeugstruktur vorgegebene, nichttransparente Fläche, insbesondere durch eine A-Säulen-Oberfläche, gebildet sein. So kann die erfasste Fahrzeugumgebung auf besonders einfache und kostengünstige Weise mit besonders geringer Sichteinschränkung für den Fahrer des Fahrzeugs angezeigt werden. Weiter alternativ und/oder zusätzlich kann die Projektionsfläche auch durch eine von der Fahrzeugstruktur vorgegebene transparente Fläche, insbesondere durch eine Frontscheibenfläche und/oder durch eine Seitenscheibenfläche des Fahrzeugs, gebildet sein. Dadurch kann die erfasste Fahrzeugumgebung ebenfalls einfach und kostengünstig angezeigt werden.

Erfindungsgemäß ist eine Stelleinrichtung vorgesehen, mittels der der Transparenzgrad der Projektionsfläche eingestellt und/oder verstellt werden kann. Auf diese Weise kann beispielsweise bei einer Fensterscheibe als transparente Projektionsfläche der Transparenzgrad der Fensterscheibe je nach Fahrsituation optimal eingestellt werden. Bevorzugt ist dabei vorgesehen, dass mittels der Stelleinrichtung ein Transparenzgrad der Projektionsfläche von 0% bis 100% Transparenz eingestellt werden kann.

Weiter bevorzugt ist die Stelleinrichtung signaltechnisch mit einer durch eine Person betätigbaren Betätigungseinrichtung, insbesondere mit einem Taster oder mit einem Schalter, verbunden, mittels der der Transparenzgrad der Projektionsfläche eingestellt werden kann. Mittels einer derartigen Betätigungseinrichtung kann die Person bzw. der Fahrer des Fahrzeugs die Transparenz der Projektionsfläche je nach Bedarf wie gewünscht einstellen. Erfindungsgemäß ist die Stelleinrichtung aber auch Bestandteil einer Regel- und/oder Steuereinrichtung, mittels der der Transparenzgrad der Projektionsfläche in Abhängigkeit von der aktuellen Fahrsituation des Fahrzeugs, selbsttätig bzw. automatisch eingestellt werden kann. Eine derartige Regel- und/oder Steuereinrichtung ermöglicht eine besonders komfortable und gleichzeitig zuverlässige Verstellung des Projektionsflächen-Transparenzgrads. Beispielsweise kann bei einer durch eine Seitenscheibe gebildeten Projektionsfläche während eines Rangiervorgangs mit dem Fahrzeug die Transparenz der Projektionsfläche verringert werden, um die Anzeige eines schwer einsehbaren Bereichs der Fahrzeugumgebung an der Projektionsfläche zu verbessern. Erfindungsgemäß wird die Transparenz der Projektionsfläche verringert, wenn sich beispielsweise eine Person in einer schlecht einsehbaren Bereich der Fahrzeugumgebung befindet.

In einer weiteren bevorzugten Ausgestaltung weist die Projektionsfläche einen transparenten Flächenbereich und einen nicht transparenten Flächenbereich auf, um die Projektionsfläche wie gewünscht anordnen zu können.

Besonders bevorzugt ist die Projektionseinrichtung derart ausgebildet, dass die Anzeige an der Projektionsfläche der Anzeige eines regulären Seitenspiegels oder eines regulären Frontspiegels entspricht. So kann der Fahrer des Fahrzeugs die Fahrzeugumgebung in gewohnter Weise betrachten, wodurch der Fahrerkomfort deutlich erhöht wird.

Vorzugsweise wird der Projektionsbereich direkt an der transparenten Projektionsfläche angezeigt, um die erfasste Fahrzeugumgebung auf einfache Weise anzeigen zu können. Erfindungsgemäß wird die erfasste Fahrzeugumgebung auch derart an die transparente Projektionsfläche projiziert, dass es für den Fahrer scheint, dass die erfasste Fahrzeugumgebung außerhalb des Fahrzeugs angezeigt wird. Durch eine derartige Anzeige wird der Fahrerkomfort deutlich erhöht. Bevorzugt ist dabei vorgesehen, dass die erfasste Fahrzeugumgebung derart an der transparenten Projektionsfläche des Fahrzeugs dargestellt wird, dass es für den Fahrer scheint, dass die erfasste Fahrzeugumgebung mit einem definierten Abstand von dem Fahrer beabstandet, insbesondere 2m bis 3m von dem Fahrer beabstandet, angezeigt wird, um einen besonders hohen Fahrerkomfort zu gewährleisten. Der Abstand von 2m bis 3m hat sich als besonders komfortabel für den Fahrer bzw. für die Augen des Fahrers herausgestellt. Zudem ist bei einem derartigen Abstand die Anpassungszeit bzw. die Akkomodationszeit des Auges besonders gering.

In einer konkreten Ausgestaltung ist die Projektionseinrichtung durch ein Head-up-Display gebildet, um die Projektionseinrichtung funktionssicher und kompakt auszubilden. Alternativ kann die Projektionseinrichtung aber auch einen Beamer zur Projektion der erfassten Fahrzeugumgebung aufweisen, um die Projektionseinrichtung besonders einfach auszubilden. Weiter alternativ kann die Projektionseinrichtung auch durch eine sogenannte Augmented Reality Brille, beispielsweise Google Glasses, gebildet sein, um die Projektionseinrichtung besonders kompakt auszubilden.

Vorzugsweise ist eine Regel- und/oder Steuereinrichtung vorgesehen, mittels der die Anzeige der Augmented Reality Brille in Abhängigkeit von der Kopfrichtung und/oder der Blickrichtung des Fahrers selbsttätig bzw. automatisch verstellt und/oder eingestellt werden kann. Bevorzugt ist dabei vorgesehen, dass die erfasste Fahrzeugumgebung nur dann mittels der Augmented Reality Brille angezeigt wird, wenn der Fahrer in eine definierte Richtung, insbesondere in Richtung der erfassten Fahrzeugumgebung und/oder in Richtung der Bild-Erfassungseinrichtung zur Erfassung der Fahrzeugumgebung, blickt. Beispielsweise kann ein erfasster, seitlich neben dem Fahrzeug befindlicher Seitenbereich nur dann mittels der Augmented Reality Brille angezeigt werden, wenn der Fahrer in Richtung der dem Seitenbereich zugeordneten Seitenscheibe blickt.

In einer weiteren bevorzugten Ausgestaltung des erfindungsgemäßen Fahrzeugs ist der transparente Bildschirm durch ein LC-, LED- oder OLED-Bildschirm gebildet, um den transparenten Bildschirm einfach und funktionssicher auszubilden. Weiter bevorzugt ist der transparente Bildschirm wenigstens einer Fensterscheibe, insbesondere wenigstens einer Seitenscheibe und/oder wenigstens einer Frontscheibe, des Fahrzeugs zugeordnet.

Vorzugsweise ist der transparente Bildschirm in einer, insbesondere flächigen, Anlage mit einer an einen Fahrzeug-Innenraum angrenzenden Innenseite der Fensterscheibe. Auf diese Weise kann der transparente Bildschirm der Fensterscheibe besonders einfach zugeordnet werden. Alternativ und/oder zusätzlich kann der transparente Bildschirm aber auch, in Scheiben-Dickenrichtung gesehen, zwischen zwei Scheibenelementen der Fensterscheibe angeordnet sein, um einen besonders robusten Aufbau zu realisieren.

In einer bevorzugten konkreten Ausgestaltung kann mittels der Bild-Erfassungseinrichtung ein, in Fahrzeug-Querrichtung gesehen, seitlich neben dem Fahrzeug befindlicher Seitenbereich bildlich und/oder filmisch erfasst werden. Alternativ und/oder zusätzlich kann mittels der Bild-Erfassungseinrichtung ein, in Fahrzeug-Längsrichtung gesehen, unmittelbar vor dem Fahrzeug befindlicher Frontbereich bildlich und/oder filmisch erfasst werden.

Zur Lösung der bereits genannten Aufgabe wird ferner ein Verfahren zum Betreiben eines Fahrzeugs, insbesondere eines Nutzfahrzeugs, beansprucht, wobei das Fahrzeug ein Spiegelersatzsystem mit wenigstens einer Bild-Erfassungseinrichtung, insbesondere einer Kamera, aufweist, mittels der zumindest ein Teil der Fahrzeugumgebung bildlich und/oder filmisch erfasst wird, wobei die Bild-Erfassungseinrichtung signaltechnisch mit wenigstens einer Anzeigeeinrichtung gekoppelt ist, mittels der die erfasste Fahrzeugumgebung einem Fahrer des Fahrzeugs angezeigt wird, wobei die Anzeigeeinrichtung durch eine Projektionseinrichtung gebildet ist, mittels der die erfasste Fahrzeugumgebung auf wenigstens eine definierte Projektionsfläche projiziert wird, wobei die erfasste Fahrzeugumgebung derart an die als transparente Projektionsfläche ausgebildete definierte Projektionsfläche projiziert wird, dass es für den Fahrer scheint, dass die erfasste Fahrzeugumgebung außerhalb des Fahrzeugs angezeigt wird, wobei eine Stelleinrichtung vorgesehen ist, mittels der der Transparenzgrad der Projektionsfläche eingestellt und/oder verstellt wird, wobei eine Fahrsituations-Erkennungseinrichtung vorgesehen ist, die signaltechnisch mit der Stelleinrichtung verbunden ist und die aktuelle Fahrsituation erfasst, und wobei die Stelleinrichtung Bestandteil einer Regel- und/oder Steuereinrichtung ist, mittels der der Transparenzgrad der Projektionsfläche in Abhängigkeit von der aktuellen Fahrsituation, selbsttätig eingestellt wird, wobei der Transparenzgrad der Projektionsfläche verringert wird, um die Anzeige eines schwer einsehbaren Bereichs der Fahrzeugumgebung an der Projektionsfläche zu verbessern.

Die sich durch die erfindungsgemäße Verfahrensführung ergebenden Vorteile sind identisch mit den bereits gewürdigten Vorteilen des erfindungsgemäßen Fahrzeugs und werden an dieser Stelle nicht wiederholt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Darstellung von oben ein erfindungsgemäßes Fahrzeug;
- Fig. 2: eine schematische Darstellung, anhand der der Aufbau einer Projektionseinrichtung des Fahrzeugs erläutert wird;
- Fig. 3: eine schematische Darstellung, anhand der eine zweite Ausführungsform der Projektionseinrichtung erläutert wird;
- Fig. 4: ein Fahrerhaus des Fahrzeugs in einer Perspektivdarstellung von innen mit einer ersten Darstellung einer erfassten Fahrzeugumgebung;
- Fig. 5: eine Perspektivdarstellung des Fahrzeugs von außen, mit der die erste Darstellung näher erläutert wird;
- Fig. 6: in einer Darstellung gemäß Fig. 4 eine zweite Darstellung der Fahrzeugumgebung;
- Fig. 7: in einer Darstellung gemäß Fig. 4 eine dritte Darstellung der Fahrzeugumgebung;
- Fig. 8: in einer Darstellung gemäß Fig. 4 eine vierte Darstellung der Fahrzeugumgebung;
- Fig. 9: in einer Darstellung gemäß Fig. 1 eine zweite Ausführungsform des Fahrzeugs;
- Fig. 10: eine schematische Darstellung, aus der der Aufbau einer ersten Ausführungsform einer Seitenscheibe des Fahrzeugs hervorgeht; und
- Fig. 11: das Fahrzeug in einer Perspektivdarstellung von innen mit einer zweiten Ausführungsform der Seitenscheibe.

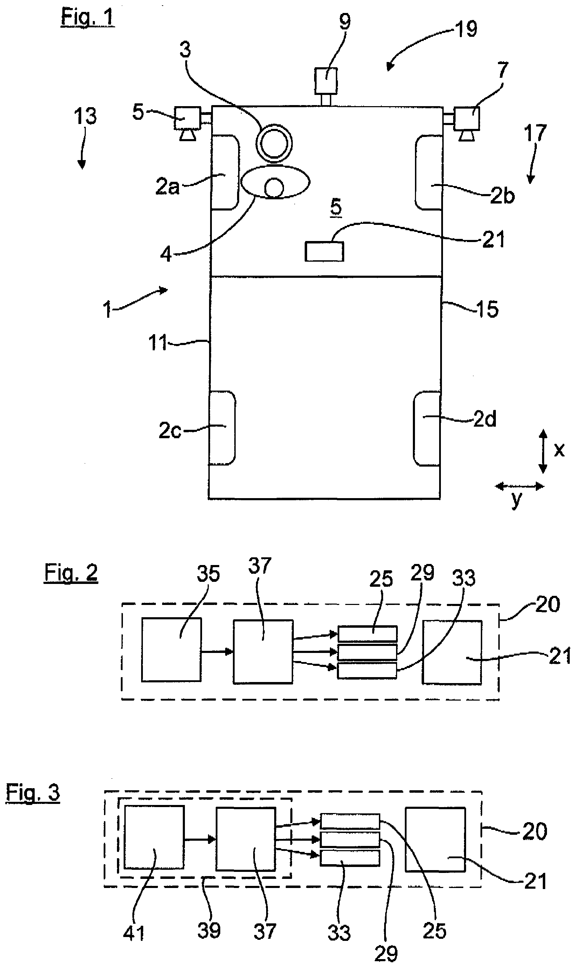

In Fig. 1 ist ein hier beispielhaft als Lastkraftwagen ausgebildetes Fahrzeug 1 in einer Darstellung von oben gezeigt. Das Fahrzeug 1 weist hier beispielhaft vier Fahrzeugräder, 2a, 2b, 2c, 2d, ein Lenkrad 3 sowie einen Fahrerplatz 4 auf. Zudem weist das Fahrzeug 1 hier beispielhaft auch drei Bild-Erfassungseinrichtungen 5, 7, 9 auf, mittels denen jeweils ein Teil der Fahrzeugumgebung bildlich bzw. filmisch erfasst werden kann. Die Bilderfassungseinrichtungen 5, 7, 9 sind hier beispielhaft durch Kameras gebildet.

Die Kamera 5 ist hier dabei, in Fahrzeug-Querrichtung y gesehen, seitlich außen an einer ersten Außenseite 11 des Fahrzeugs 1 sowie an einem, in Fahrzeug-Längsrichtung x gesehen, vorderen Endbereich des Fahrzeugs 1 angeordnet. Die Kamera 5 ist dabei derart ausgerichtet, dass mittels dieser ein seitlich neben dem Fahrzeug 1 und hinter der Kamera 5 liegender erster Seitenbereich 13 erfasst werden kann. Die Kamera 7 ist seitlich außen gegenüberliegend zu der Kamera 5 an einer zweiten Außenseite 15 des Fahrzeugs 1 angeordnet. Mittels der Kamera 7 kann dabei ein seitlich neben dem Fahrzeug 1 sowie hinter der Kamera 7 liegender zweiter Seitenbereich 17 erfasst werden. Die Kamera 9 ist in Fahrzeug-Querrichtung y mittig vorne an dem Fahrzeug 1 angeordnet. Mittels der Kamera 9 kann ein vor dem Fahrzeug 1 sowie, in Fahrzeug- Hochachsenrichtung z gesehen, unterhalb der Kamera 9 befindlicher Bereich 19 erfasst werden.

Wie in Fig. 1 weiter gezeigt ist, sind die Kameras 5, 7, 9 signaltechnisch mit einem Projektor bzw. Beamer 21 einer fahrzeugseitigen Projektionseinrichtung 20 (Fig. 2) verbunden, mittels dem die mittels der Kameras 5, 7, 9 erfassten Bereiche 11, 13, 19 auf definierte Projektionsflächen projiziert werden können. Die Kameras 5, 7, 9 und die Projektionseinrichtung 20 bilden ein Spiegelersatzsystem aus, mittels herkömmliche Seitenspiegel und einen herkömmlichen Frontspiegel ersetzt werden.

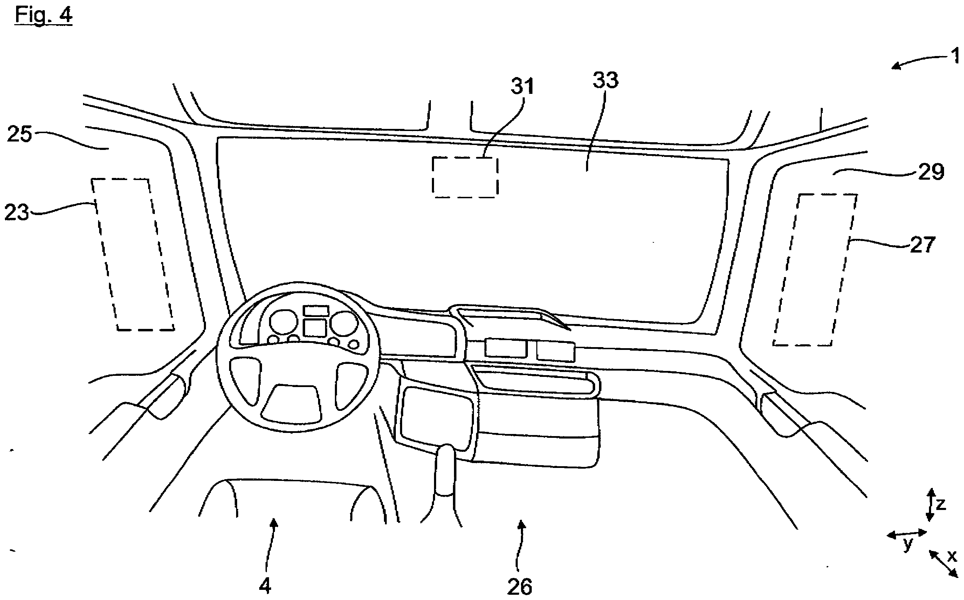

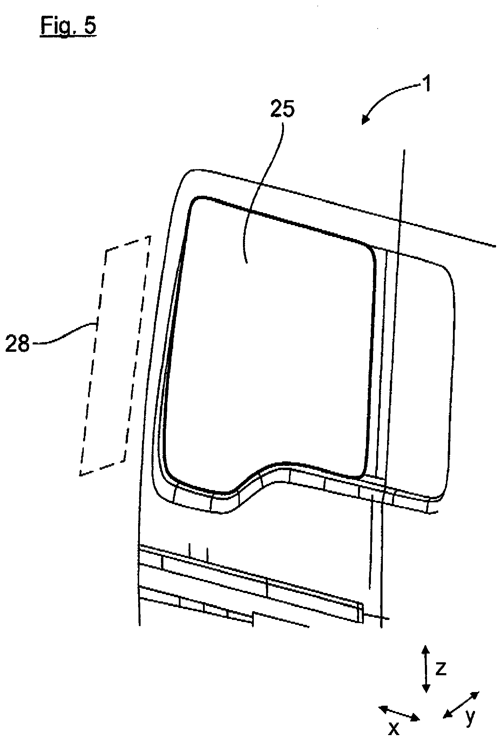

Gemäß Fig. 4 wird der mit der Kamera 5 erfasste erste Seitenbereich 13 mittels des Beamers 21 auf eine mit gestrichelten Linien angedeutete Projektionsfläche 23 projiziert. Die Projektionsfläche 23 ist hier beispielhaft durch eine an der ersten Außenseite 11 des Fahrzeugs 1 angeordnete erste Seitenscheibe 25 eines Fahrerhauses 26 des Fahrzeugs 1 gebildet. Der erste Seitenbereich 13 wird hier dabei derart an die transparente Projektionsfläche 23 projiziert, dass es für den Fahrer scheint, dass der Seitenbereich 13 mit einem herkömmlichen, an der ersten Außenseite 11 des Fahrzeugs 1 angeordneten Seitenspiegel angezeigt wird. Somit wird der erste Seitenbereich 13 hier auch derart an die transparente Projektionsfläche 23 projiziert, dass es für den Fahrer scheint, dass der Seitenbereich 13 außerhalb des Fahrzeugs 1 angezeigt wird. Zum Vergleich ist in Fig. 5 schematisch eine Anzeigefläche 28 eines herkömmlichen Seitenspiegels angedeutet.

Der zweite Seitenbereich 17 wird mittels des Beamers 21 an eine ebenfalls mit gestrichelten Linien angedeutete Projektionsfläche 27 projiziert. Die Projektionsfläche 27 ist hier beispielhaft durch eine an der zweiten Außenseite 15 des Fahrzeugs 1 angeordnete zweite Seitenscheibe 29 des Fahrerhauses 26 gebildet. Der zweite Seitenbereich 17 wird hier dabei auf identische Weise an der Projektionsfläche 27 angezeigt, wie der erste Seitenbereich 13 an der ersten Projektionsfläche 23.

Der Frontbereich 19 wird mittels des Beamers 21 auf eine mit gestrichelten Linien angedeutete Projektionsfläche 31 projiziert. Die Projektionsfläche 31 ist hier beispielhaft durch eine Frontscheibe 33 des Fahrzeugs 1 gebildet. Der Frontbereich 19 wird an der Projektionsfläche 31 ebenfalls auf identische Weise angezeigt, wie der erste Seitenbereich 13 an der ersten Projektionsfläche 23.

In Fig. 2 ist der Aufbau der Projektionseinrichtung 20 schematisch gezeigt. Die Projektionseinrichtung 20 weist hier beispielhaft eine durch eine Person betätigbare Betätigungseinrichtung 35, beispielsweise einen Taster oder einen Schalter, auf, mittels der eine signaltechnisch mit der Betätigungseinrichtung 35 verbundene Stelleinrichtung 37 betätigt werden kann. Mittels der signaltechnisch mit den Seitenscheiben 25, 29 und der Frontscheibe 33 verbundenen Stelleinrichtung 37 kann die Transparenz bzw. der Tranzparenzgrad der Projektionsflächen 23, 27, 31 verstellt werden. Mittels der Betätigungseinrichtung 35 und der Stelleinrichtung 37 kann der Fahrer des Fahrzeugs 1 daher die Transparenz der Projektionsflächen 23, 27, 31 wie gewünscht einstellen.

In Fig. 3 ist eine zweite Ausführungsform der Projektionseinrichtung 20 gezeigt. Die Stelleinrichtung 37 ist hier Bestandteil einer Regel- und/oder Steuereinrichtung 39, mittels der der Transparenzgrad der Projektionsflächen 23, 27, 31 in Abhängigkeit von der aktuellen Fahrsituation des Fahrzeugs 1 selbsttätig bzw. automatisch verstellt wird. Die aktuelle Fahrsituation des Fahrzeugs 1 wird dabei mittels einer signaltechnisch mit der Stelleinrichtung 37 verbundenen Fahrsituation-Erkennungseinrichtung 41 der Regel- und/oder Steuereinrichtung 39 erfasst. Zur Erfassung der aktuellen Fahrsituation des Fahrzeugs 1 kann die Fahrsituation-Erkennungseinrichtung 41 beispielsweise mehrere fahrzeugseitige Kameras aufweisen. Eine Fahrsituation, bei der die Transparenz der Projektionsflächen 23, 27 der Seitenscheiben 25, 29 mittels der Regel- und/oder Steuereinrichtung 39 verringert wird, kann beispielsweise ein Rangiervorgang mit dem Fahrzeug sein, bei dem der Fahrer die an den Projektionsflächen 23, 27 angezeigte Fahrzeugumgebung gut erkennen muss.

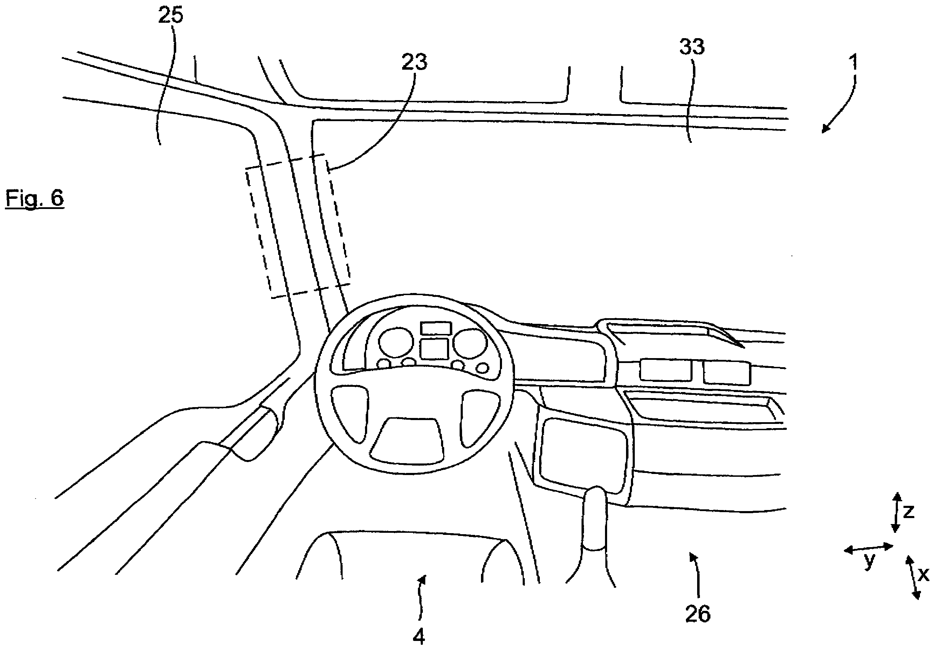

In Fig. 6 ist eine zweite Darstellung des Seitenbereichs 13 gezeigt. Die Projektionsfläche 23 ist hier nicht nur allein an der Seitenscheibe 25, sondern zusätzlich auch an einer Oberfläche 43 einer A-Säule 45 des Fahrzeugs 1 und an der Frontscheibe 33 ausgebildet. Somit weist die Projektionsfläche 23 hier eine durch die A-Säulen-Oberfläche 43 gebildeten nicht transparenten Bereich, einen durch die erste Seitenscheibe 25 gebildeten transparenten Bereich und einen durch die Frontscheibe 33 gebildeten transparenten Bereich auf.

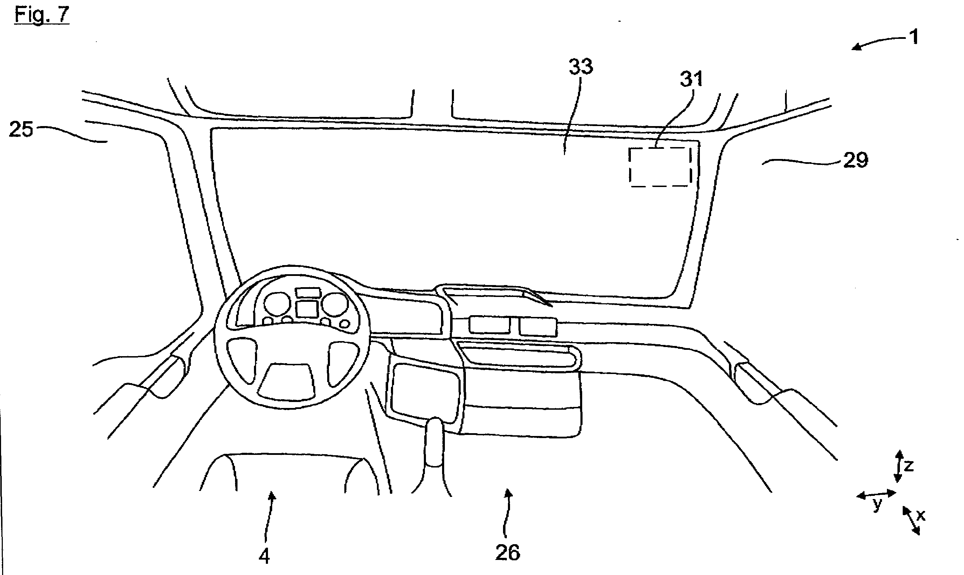

In Fig. 7 ist eine zweite Darstellung des Frontbereichs 19 gezeigt. Im Vergleich zu der in Fig. 4 gezeigten ersten Darstellung ist die Projektionsfläche 31 hier nicht, in Fahrzeug-Querrichtung y gesehen, mittig an der Frontscheibe 33, sondern seitlich außen gegenüberliegend zu dem Fahrerplatz 4 oben an der Frontscheibe 33 angeordnet.

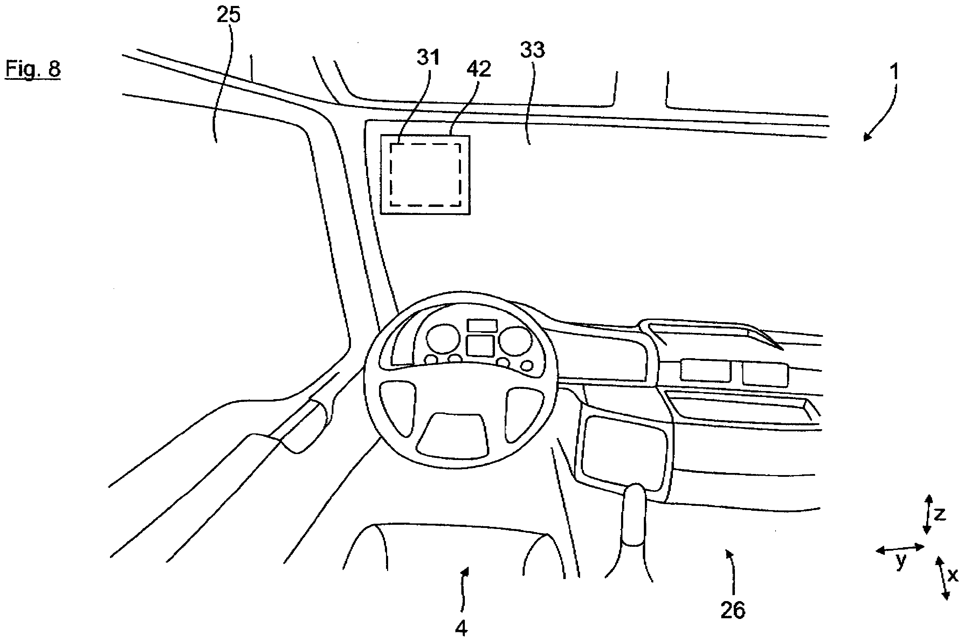

In Fig. 8 ist eine dritte Darstellung des Frontbereichs 19 gezeigt. Im Vergleich zu der in Fig. 4 gezeigten ersten Darstellung ist die Projektionsfläche 31 hier nicht in Fahrzeug-Querrichtung y gesehen, mittig oben, sondern seitlich außen im Bereich des Fahrerplatzes 4 oben an der Frontscheibe 33 angeordnet. Zudem ist die Projektionsfläche 31 hier nicht durch die Frontscheibe 33, sondern durch ein zusätzliches, speziell zur Anzeige des Frontbereichs 19 vorgesehenes Projektionselement 42 gebildet. Das Projektionselement 42 kann dabei beispielsweise mittels einer Klebeverbindung an der Frontscheibe 33 festgelegt sein. Zudem ist das Projektionselement 42 hier transparent ausgebildet.

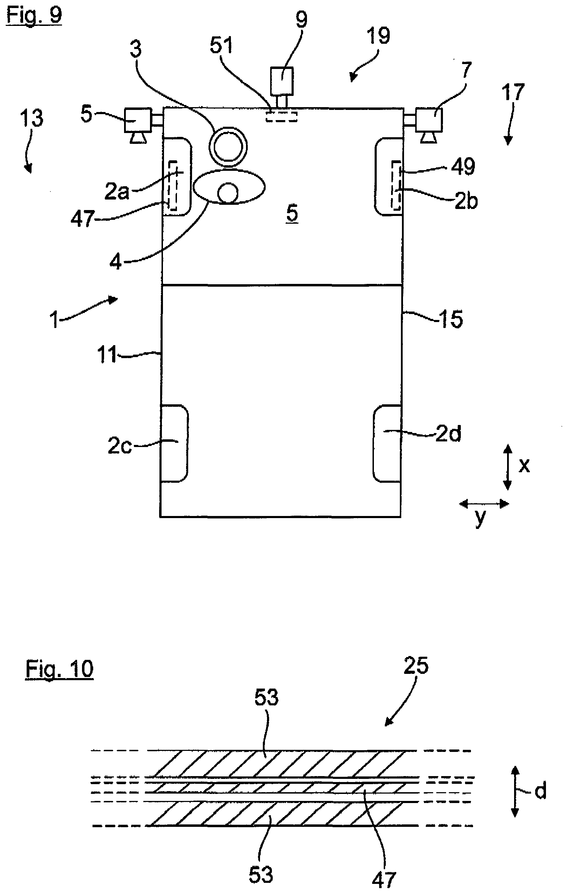

In Fig. 9 ist eine zweite Ausführungsform des Fahrzeugs 1 gezeigt. Im Vergleich zu der in Fig. 1 gezeigten ersten Ausführungsform ist hier keine Projektionseinrichtung 20 vorgesehen, mittels der die mittels der Kameras 5, 7, 9 erfassten Bereiche projiziert werden. Anstelle dessen sind hier mehrere transparente Bildschirme 47, 49, 51 vorgesehen, mittels denen die mit den Kameras 5, 7, 9 erfassten Bereiche angezeigt werden können.

Der transparente Bildschirm 47 ist hier dabei der ersten Seitenscheibe 25 des Fahrzeugs 1 zugeordnet und derart signaltechnisch mit der Kamera 5 verbunden, dass der mittels der Kamera 5 erfasste erste Seitenbereich 13 an den Bildschirm 47 angezeigt werden kann. Der Bildschirm 49 ist hier der zweiten Seitenscheibe 29 des Fahrzeugs 1 zugeordnet und signaltechnisch mit der Kamera 7 verbunden, so dass der Seitenbereich 17 an dem Bildschirm 49 angezeigt werden kann. Der Bildschirm 51 ist der Frontscheibe 33 des Fahrzeugs 1 zugeordnet und signaltechnisch mit der Kamera 9 verbunden, so dass der Frontbereich 19 an dem Bildschirm 51 angezeigt werden kann. Sofern mittels des jeweiligen transparenten Bildschirms 47, 49, 51 nichts angezeigt wird, ist der jeweilige Bildschirm 47, 49, 51 hier vollkommen durchsichtig bzw. transparent. Sofern mittels des jeweiligen Bildschirms 47, 49, 51 etwas angezeigt wird, sind diese hier beispielhaft nur noch an denjenigen Bereichen durchsichtig bzw. transparent, an denen nichts angezeigt wird.

In Fig. 10 ist eine erste Variante zur Anordnung des transparenten Bildschirms 47 an der Seitenscheibe 25 gezeigt. Der Bildschirm 47 ist hier dabei, in Dickenrichtung d der Seitenscheibe 25 gesehen, zwischen zwei Scheibenelementen 53 der hier mehrfach verglasten Seitenscheibe 25 angeordnet. Der transparente Bildschirm 47 kann dabei beispielsweise mittels einer Klebeverbindung an den Scheibenelementen 53 festgelegt sein.

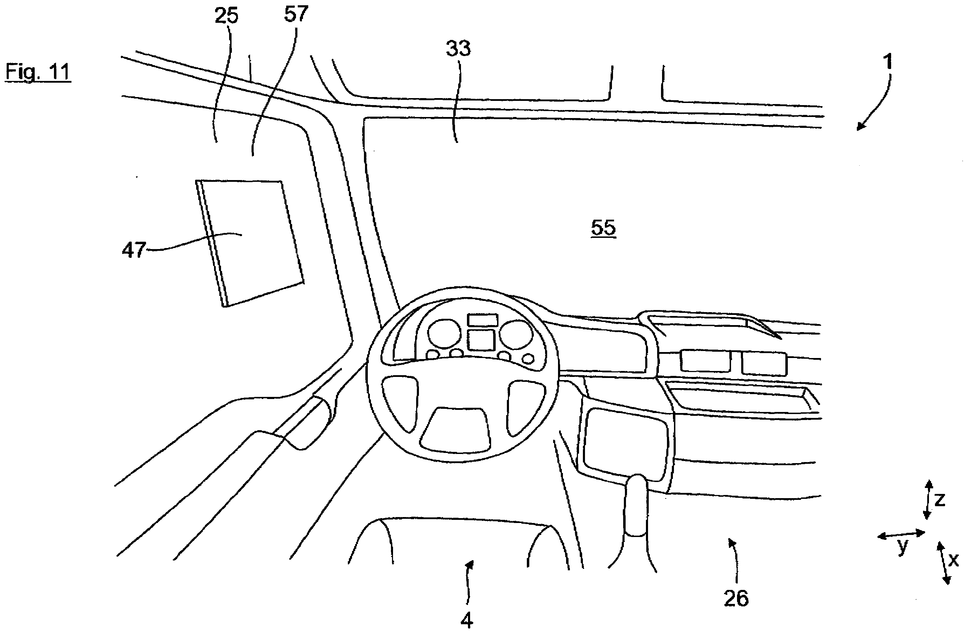

Eine zweite Variante zur Anordnung des Bildschirms 47 an der Seitenscheibe 25 ist in Fig. 11 gezeigt. Im Vergleich zu der in Fig. 10 gezeigten Variante ist der Bildschirm 47 hier nicht zwischen zwei Scheibenelementen der Seitenscheibe 25 angeordnet, sondern in einer flächigen Anlageverbindung mit einer an einen Fahrzeug-Innenraum 55 angrenzenden Innenseite 57 der Seitenscheibe 25. Die Befestigung des Bildschirms 47 an der Seitenscheibe 25 kann dabei ebenfalls mittels einer Klebeverbindung erfolgen.

### Bezugszeichen

- 1: Fahrzeug
- 2: Fahrzeugrad
- 3: Lenkrad
- 4: Fahrersitz
- 5: Kamera
- 7: Kamera
- 9: Kamera
- 11: erste Außenseite
- 13: erster Seitenbereich
- 15: zweite Außenseite
- 17: zweiter Seitenbereich
- 19: Frontbereich
- 20: Projektionseinrichtung
- 21: Beamer
- 23: Projektionsfläche
- 25: erste Seitenscheibe
- 26: Fahrerhaus
- 27: Projektionsfläche
- 28: Anzeigefläche
- 29: zweite Seitenscheibe
- 31: Projektionsfläche
- 33: Frontscheibe
- 35: Betätigungseinrichtung
- 37: Stelleinrichtung
- 39: Regel- und/oder Steuereinrichtung
- 41: Fahrsituation-Erkennungseinrichtung
- 42: Projektionselement
- 43: Oberfläche
- 45: A-Säule
- 47: Bildschirm
- 49: Bildschirm
- 51: Bildschirm
- 53: Scheibenelement
- 55: Fahrzeug-Innenraum
- 57: Innenseite
- d: Dickenrichtung

## Patentansprüche

1. Fahrzeug, insbesondere Nutzfahrzeug, mit einem Spiegelersatzsystem, das wenigstens eine Bild-Erfassungseinrichtung (5, 7, 9), insbesondere eine Kamera aufweist, mittels der zumindest ein Teil der Fahrzeugumgebung (13, 17, 19) bildlich und/oder filmisch erfassbar ist, wobei die Bild-Erfassungseinrichtung (5, 7, 9) signaltechnisch mit einer Anzeigeeinrichtung gekoppelt ist, mittels der die erfasste Fahrzeugumgebung (13, 17, 19) einem Fahrer des Fahrzeugs (1) anzeigbar ist, wobei die Anzeigeeinrichtung durch eine Projektionseinrichtung (20) gebildet ist, mittels der die erfasste Fahrzeugumgebung (13, 17, 19) auf wenigstens eine definierte Projektionsfläche (23, 27, 31) projizierbar ist, wobei die erfasste Fahrzeugumgebung (13, 17, 19) derart an die als transparente Projektionsfläche (23, 27, 31) ausgebildete definierte Projektionsfläche (23, 27, 31) projiziert wird, dass es für den Fahrer scheint, dass die erfasste Fahrzeugumgebung (13, 17, 19) außerhalb des Fahrzeugs (1) angezeigt wird, wobei eine Stelleinrichtung (37) vorgesehen ist, mittels der der Transparenzgrad der Projektionsfläche (23, 27, 31) einstellbar und/oder verstellbar ist,
**dadurch gekennzeichnet, dass**
eine Fahrsituations-Erkennungseinrichtung (39) vorgesehen ist, die signaltechnisch mit der Stelleinrichtung (37) verbunden ist und die aktuelle Fahrsituation erfasst, und dass
die Stelleinrichtung (37) Bestandteil einer Regel- und/oder Steuereinrichtung (39) ist, mittels der der Transparenzgrad der Projektionsfläche (23, 27, 31) in Abhängigkeit von der aktuellen Fahrsituation selbsttätig einstellbar ist, wobei der Transparenzgrad der Projektionsfläche (23, 27, 31) verringert wird, um die Anzeige eines schwer einsehbaren Bereichs der Fahrzeugumgebung an der Projektionsfläche (23, 27, 31) zu verbessern.

2. Fahrzeug nach Anspruch 1, **dadurch gekennzeichnet, dass** die Projektionsfläche (31) durch ein zusätzliches, speziell zur Anzeige der Fahrzeugumgebung vorgesehenes Projektionselement (42) gebildet ist, wobei das Projektionselement (42) transparent ausgebildet ist.

3. Fahrzeug nach Anspruch 1 oder 2, **dadurch gekennzeichnet, dass** die Projektionsfläche (23, 27, 31) durch eine von der Fahrzeugstruktur vorgegebene transparente Fläche, insbesondere durch eine Frontscheibe (33) und/oder durch eine Seitenscheibe (25, 29) des Fahrzeugs (1), gebildet ist.

4. Fahrzeug nach einem der vorhergehenden Ansprüche, **dadurch gekennzeichnet, dass** mittels der Stelleinrichtung (37) der Transparenzgrad der Projektionsfläche (23, 27, 31) von 0% bis 100% Transparenz einstellbar ist.

5. Fahrzeug nach einem der vorhergehenden Ansprüche, **dadurch gekennzeichnet, dass** die Stelleinrichtung (37) signaltechnisch mit einer durch eine Person betätigbaren Betätigungseinrichtung (35), insbesondere mit einem Taster und/oder einem Schalter, verbunden ist, mittels der der Transparenzgrad der Projektionsfläche (23, 27, 31) einstellbar ist.

6. Fahrzeug nach einem der Ansprüche 3 bis 5, **dadurch gekennzeichnet, dass** die Projektionsfläche (23) einen transparenten Flächenbereich und einen nicht transparenten Flächenbereich aufweist.

7. Fahrzeug nach einem der vorhergehenden Ansprüche, **dadurch gekennzeichnet, dass** die Projektionseinrichtung (20) derart ausgebildet ist, dass die Anzeige an der Projektionsfläche (23, 27, 31) der Anzeige eines regulären Seitenspiegels oder eines regulären Frontspiegels entspricht.

8. Fahrzeug nach einem der vorhergehenden Ansprüche, **dadurch gekennzeichnet, dass** die Projektionseinrichtung durch ein Head-up-Display gebildet ist, oder dass die Projektionseinrichtung (20) einen Beamer (21) aufweist, oder dass die Projektionseinrichtung durch eine Augmented Reality Brille gebildet ist.

9. Fahrzeug nach Anspruch 8, **dadurch gekennzeichnet, dass** eine Regel- und/oder Steuereinrichtung vorgesehen ist, mittels der die Anzeige der Augmented Reality Brille in Abhängigkeit von der Kopfrichtung und/oder der Blickrichtung des Fahrers selbsttätig verstellbar und/oder einstellbar ist, wobei bevorzugt vorgesehen ist, dass die erfasste Fahrzeugumgebung (13, 17, 19) nur dann mittels der Augmented Reality Brille anzeigbar ist, wenn der Fahrer in eine definierte Richtung, insbesondere in Richtung der erfassten Fahrzeugumgebung und/oder in Richtung der Bild-Erfassungseinrichtung zur Erfassung der Fahrzeugumgebung, blickt.

10. Fahrzeug nach einem der vorhergehenden Ansprüche, **dadurch gekennzeichnet, dass** mittels der Bild-Erfassungseinrichtung (5, 7) ein, in Fahrzeug-Querrichtung (y) gesehen, seitlich neben dem Fahrzeug (1) befindlicher Seitenbereich (13, 17) bildlich und/oder filmisch erfassbar ist, und/oder dass mittels der Bild-Erfassungseinrichtung (9) ein, in Fahrzeug-Längsrichtung (x) gesehen, unmittelbar vor dem Fahrzeug (1) befindlicher Frontbereich (19) bildlich und/oder filmisch erfassbar ist.

11. Verfahren zum Betreiben eines Fahrzeugs, insbesondere eines Nutzfahrzeugs und/oder eines Fahrzeugs nach einem der vorhergehenden Ansprüche, wobei das Fahrzeug (1) ein Spiegelersatzsystem mit wenigstens einer Bild-Erfassungseinrichtung (5, 7, 9), insbesondere einer Kamera, aufweist, mittels der zumindest ein Teil der Fahrzeugumgebung (13, 17, 19) bildlich und/oder filmisch erfasst wird, wobei die Bild-Erfassungseinrichtung (5, 7, 9) signaltechnisch mit wenigstens einer Anzeigeeinrichtung gekoppelt ist, mittels der die erfasste Fahrzeugumgebung (13, 17, 19) einem Fahrer des Fahrzeugs (1) angezeigt wird, wobei die Anzeigeeinrichtung durch eine Projektionseinrichtung (20) gebildet ist, mittels der die erfasste Fahrzeugumgebung (13, 17, 19) auf eine definierte Projektionsfläche (23, 27, 31) projiziert wird, wobei die erfasste Fahrzeugumgebung (13, 17, 19) derart an die als transparente Projektionsfläche (23, 27, 31) ausgebildete definierte Projektionsfläche (23, 27, 31) projiziert wird, dass es für den Fahrer scheint, dass die erfasste Fahrzeugumgebung (13, 17, 19) außerhalb des Fahrzeugs (1) angezeigt wird, wobei eine Stelleinrichtung (37) vorgesehen ist, mittels der der Transparenzgrad der Projektionsfläche (23, 27, 31) eingestellt und/oder verstellt wird,
**dadurch gekennzeichnet, dass**
eine Fahrsituations-Erkennungseinrichtung (39) vorgesehen ist, die signaltechnisch mit der Stelleinrichtung (37) verbunden ist und die aktuelle Fahrsituation erfasst, und dass die Stelleinrichtung (37) Bestandteil einer Regel- und/oder Steuereinrichtung (39) ist, mittels der der Transparenzgrad der Projektionsfläche (23, 27, 31) in Abhängigkeit von der aktuellen Fahrsituation, selbsttätig eingestellt wird, wobei der Transparenzgrad der Projektionsfläche (23, 27, 31) verringert wird, um die Anzeige eines schwer einsehbaren Bereichs der Fahrzeugumgebung an der Projektionsfläche (23, 27, 31) zu verbessern.

## Claims

1. Vehicle, in particular utility vehicle, having a mirror replacement system which has at least one image-capturing device (5, 7, 9), in particular a camera, by means of which at least part of the surroundings (13, 17, 19) of the vehicle can be captured visually and/or as a film, wherein the image-capturing device (5, 7, 9) is coupled in signalling terms to a display device by means of which the captured surroundings (13, 17, 19) of the vehicle can be displayed to a driver of the vehicle (1), wherein the display device is formed by a projection device (20) by means of which the captured surroundings (13, 17, 19) of the vehicle can be projected onto at least one defined projection surface (23, 27, 31), wherein the captured surroundings (13, 17, 19) of the vehicle are projected onto the defined projection surface (23, 27, 31) which is embodied as a transparent projection surface (23, 27, 31), in such a way that it appears to the driver that the captured surroundings (13, 17, 19) of the vehicle are displayed outside the vehicle (1), wherein an actuating device (37) is provided by means of which the degree of transparency of the projection surface (23, 27, 31) can be set and/or adjusted,
**characterized in that**
a driving situation-detection device (39) is provided which is connected in terms of signalling to the control device (37) and sensors the current driving situation, and **in that**
the actuating device (37) is part of a closed-loop and/or open-loop control device (39) by means of which the degree of transparency of the projection surface (23, 27, 31) can be set automatically as a function of the current driving situation, wherein the degree of transparency of the projection surface (23, 27, 31) is reduced in order to improve the displaying on the projection surface (23, 27, 31) of an area of the surroundings of the vehicle which is difficult to see.

2. Vehicle according to Claim 1, **characterized in that** the projection surface (31) is formed by an additional projection element (42) which is provided specifically for displaying the surroundings of the vehicle, wherein the projection element (42) is embodied in a transparent fashion.

3. Vehicle according to Claim 1 or 2, **characterized in that** the projection surface (23, 27, 31) is formed by a transparent surface which is predefined by the vehicle structure, in particular by a front window (33) and/or a side window (25, 29) of the vehicle (1).

4. Vehicle according to one of the preceding claims, **characterized in that** the degree of transparency of the projection surface (23, 27, 31) can be set from 0% to 100% transparency by means of the actuating device (37).

5. Vehicle according to one of the preceding claims, **characterized in that** the actuating device (37) is connected in terms of signalling to an activation device (35), in particular to pushbutton key and/or a switch, which can be activated by a person and by means of which the degree of transparency of the projection surface (23, 27, 31) can be set.

6. Vehicle according to one of Claims 3 to 5, **characterized in that** the projection surface (23) has a transparent surface area and a non-transparent surface area.

7. Vehicle according to one of the preceding claims, **characterized in that** the projection device (20) is embodied in such a way that the display on the projection surface (23, 27, 31) corresponds to the display of a normal side mirror or of a normal front mirror.

8. Vehicle according to one of the preceding claims, **characterized in that** the projection device is formed by a head-up display, or **in that** the projection device (20) has a beamer (21), or **in that** the projection device is formed by an augmented reality glasses.

9. Vehicle according to Claim 8, **characterized in that** a closed-loop and/or open-loop control device is provided by means of which the display by the augmented reality glasses can be adjusted and/or set automatically as a function of the direction of the head and/or the viewing direction of the driver, wherein there is preferably provision that the sensed surroundings (13, 17, 19) of the vehicle can be displayed by means of the augmented reality glasses only when the driver looks in a defined direction, in particular in the direction of the captured surroundings of the vehicle and/or in the direction of the image-capturing device for capturing the surroundings of the vehicle.

10. Vehicle according to one of the preceding claims, **characterized in that** a side area (13, 17) which is located laterally next to the vehicle (1) when viewed in the transverse direction (y) of the vehicle can be captured visually and/or as a film by means of the image-capturing device (5, 7), and/or **in that** a front area (19) which is located directly in front of the vehicle (1) when viewed in the longitudinal direction (x) of the vehicle can be captured visually and/or as a film.

11. Method for operating a vehicle, in particular a utility vehicle and/or a vehicle according to one of the preceding claims, in the vehicle (1) has a mirror replacement system with at least one image-capturing device (5, 7, 9), in particular a camera, by means of which at least part of the surroundings (13, 17, 19) of the vehicle is sensed visually and/or as a film, wherein the image-capturing device (5, 7, 9) is coupled in terms of signalling to at least one display device by means of which the captured surroundings (13, 17, 19) of the vehicle are displayed to a driver of the vehicle (1), wherein the display device is formed by a projection device (20) by means of which the captured surroundings (13, 17, 19) of the vehicle are projected onto a defined projection surface (23, 27, 31), wherein the captured surroundings (13, 17, 19) of the vehicle are projected onto the defined projection surface (23, 27, 31), embodied as a transparent projection surface (23, 27, 31), in such a way that it appears to the driver that the captured surroundings (13, 17, 19) of the vehicle are displayed outside the vehicle (1), wherein an actuating device (37) is provided by means of which the degree of transparency of the projection surface (23, 27, 31) is set and/or adjusted,
**characterized in that**
a driving situation-detection device (39) is provided which is connected in terms of signalling to the actuating device (37) and senses the current driving situation, and **in that**
the actuating device (37) is part of a closed-loop and/or open-loop control device (39) by means of which the degree of transparency of the projection surface (23, 27, 31) is set automatically as a function of the current driving situation, wherein the degree of transparency of the projection surface (23, 27, 31) is reduced in order to improve the displaying on the projection surface (23, 27, 31) of an area of the surroundings of the vehicle which is difficult to see.

## Revendications

1. Véhicule, en particulier véhicule utilitaire, avec un système de remplacement de rétroviseur présentant au moins un dispositif de capture d'image (5, 7, 9), en particulier une caméra permettant de détecter en image et/ou en vidéo au moins une partie de l'environnement de véhicule (13, 17, 19), dans lequel le dispositif de capture d'image (5, 7, 9) est couplé en termes de signal à un dispositif d'affichage permettant d'afficher l'environnement de véhicule détecté (13, 17, 19) pour un conducteur du véhicule (1), dans lequel le dispositif d'affichage est composé d'un dispositif de projection (20) permettant de projeter l'environnement de véhicule détecté (13, 17, 19) sur au moins une surface de projection définie (23, 27, 31), dans lequel l'environnement de véhicule détecté (13, 17, 19) est projeté sur la surface de projection définie (23, 27, 31), réalisée sous forme de surface de projection transparente (23, 27, 31), de telle sorte que le conducteur a l'impression que l'environnement de véhicule détecté (13, 17, 19) est affiché en dehors du véhicule (1), dans lequel un dispositif de réglage (37) est prévu permettant de régler et/ou d'ajuster le degré de transparence de la surface de projection (23, 27, 31),
**caractérisé en ce qu'**un dispositif de reconnaissance de situation de conduite (39) est prévu qui est relié en termes de signal au dispositif de réglage (37) et détecte la situation de conduite actuelle, et **en ce que**
le dispositif de réglage (37) fait partie d'un dispositif de régulation et/ou de commande (39) permettant de régler automatiquement le degré de transparence de la surface de projection (23, 27, 31) en fonction de la situation de conduite actuelle, le degré de transparence de la surface de projection (23, 27, 31) étant réduit pour améliorer l'affichage d'une zone difficilement visible de l'environnement de véhicule sur la surface de projection (23, 27, 31).

2. Véhicule selon la revendication 1, **caractérisé en ce que** la surface de projection (31) est composée d'un élément de projection (42) prévu spécialement pour afficher l'environnement de véhicule, l'élément de projection (42) étant réalisé de manière transparente.

3. Véhicule selon la revendication 1 ou 2, **caractérisé en ce que** la surface de projection (23, 27, 31) est composée d'une surface transparente spécifiée par la structure de véhicule, en particulier par une vitre frontale (33) et/ou par une vitre latérale (25, 29) du véhicule (1).

4. Véhicule selon l'une quelconque des revendications précédentes, **caractérisé en ce que** le dispositif de réglage (37) permet de régler le degré de transparence de la surface de projection (23, 27, 31) sur une transparence de 0 % à 100 %.

5. Véhicule selon l'une quelconque des revendications précédentes, **caractérisé en ce que** le dispositif de réglage (37) est relié en termes de signal à un élément de commande (35), utilisable par une personne, en particulier à un bouton et/ou à un commutateur permettant de régler le degré de transparence de la surface de projection (23, 27, 31).

6. Véhicule selon l'une quelconque des revendications 3 à 5, **caractérisé en ce que** la surface de projection (23) présente une zone de surface transparente et une zone de surface non transparente.

7. Véhicule selon l'une quelconque des revendications précédentes, **caractérisé en ce que** le dispositif de projection (20) est réalisé de telle sorte que l'affichage sur la surface de projection (23, 27, 31) correspond à l'affichage d'un rétroviseur ordinaire ou d'un rétroviseur frontal ordinaire.

8. Véhicule selon l'une quelconque des revendications précédentes, **caractérisé en ce que** le dispositif de projection est composé d'un affichage tête haute, ou **en ce que** le dispositif de projection (20) présente un projecteur (21), ou **en ce que** le dispositif de projection est composé de lunettes à réalité augmentée.

9. Véhicule selon la revendication 8, **caractérisé en ce qu'**un dispositif de régulation et/ou de commande est prévu qui permet d'ajuster et/ou de régler automatiquement l'affichage des lunettes à réalité augmentée en fonction de la direction de la tête et/ou de la direction du regard du conducteur, dans lequel il est prévu de préférence que l'environnement de véhicule détecté (13, 17, 19) ne peut être affiché au moyen des lunettes à réalité augmentée que lorsque le conducteur regarde dans une direction définie, en particulier dans la direction de l'environnement de véhicule détecté et/ou dans la direction du dispositif de capture d'image pour détecter l'environnement de véhicule.

10. Véhicule selon l'une quelconque des revendications précédentes, **caractérisé en ce que** le dispositif de capture d'image (5, 7) permet de détecter en image et/ou en vidéo une zone latérale (13, 17) située latéralement à côté du véhicule (1), vue dans le sens de la largeur du véhicule (y), et/ou **en ce que** le dispositif de capture d'image (9) permet de détecter en image et/ou en vidéo une zone frontale (19) située directement devant le véhicule (1), vue dans le sens de la longueur du véhicule (x).

11. Procédé d'exploitation d'un véhicule, en particulier d'un véhicule utilitaire et/ou d'un véhicule selon l'une quelconque des revendications précédentes, dans lequel le véhicule (1) présente un système de remplacement de rétroviseur par au moins un dispositif de capture d'image (5, 7, 9), en particulier une caméra permettant de détecter en image et/ou en vidéo au moins une partie de l'environnement de véhicule (13, 17, 19), dans lequel le dispositif de capture d'image (5, 7, 9) est couplé en termes de signal à au moins un dispositif d'affichage au moyen duquel l'environnement de véhicule détecté (13, 17, 19) est affiché pour un conducteur du véhicule (1), dans lequel le dispositif d'affichage est composé d'un dispositif de projection (20) permettant de projeter l'environnement de véhicule détecté (13, 17, 19) sur une surface de projection définie (23, 27, 31), dans lequel l'environnement de véhicule détecté (13, 17, 19) est projeté sur la surface de projection définie (23, 27, 31), réalisée sous forme de surface de projection transparente (23, 27, 31), de telle sorte que le conducteur a l'impression que l'environnement de véhicule détecté (13, 17, 19) est affiché en dehors du véhicule (1), dans lequel un dispositif de réglage (37) est prévu au moyen duquel le degré de transparence de la surface de projection (23, 27, 31) est réglé et/ou ajusté,
**caractérisé en ce qu'**
un dispositif de reconnaissance de situation de conduite (39) est prévu qui est relié en termes de signal au dispositif de réglage (37) et détecte la situation de conduite actuelle, et **en ce que**
le dispositif de réglage (37) fait partie d'un dispositif de régulation et/ou de commande (39) au moyen duquel le degré de transparence de la surface de projection (23, 27, 31) est réglé automatiquement en fonction de la situation de conduite actuelle, le degré de transparence de la surface de projection (23, 27, 31) étant réduit pour améliorer l'affichage d'une difficilement visible de l'environnement de véhicule sur la surface de projection (23, 27, 31).
